**Europäisches Patentamt**

**European Patent Office**

**Office européen des brevets**

(11) Veröffentlichungsnummer: **0 284 848**
A2

# (12) EUROPÄISCHE PATENTANMELDUNG

(21) Anmeldenummer: 88103674.3

(22) Anmeldetag: 09.03.88

(51) Int. Cl.⁴ **B32B 3/12**

(30) Priorität: 28.03.87 DE 3710416

(43) Veröffentlichungstag der Anmeldung:
05.10.88 Patentblatt 88/40

(84) Benannte Vertragsstaaten:
BE FR GB LU

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Huber, Dietrich
Speersort 126
D-2101 Hollern/Stade(DE)**

(54) **Verfahren zur Herstellung eines wabenförmigen Kernes für eine Leichtbau-Verbundplatte.**

(57) Die Erfindung bezieht sich auf ein Verfahren zur Herstellung eines wabenförmigen Kernes aus einem mit einem aushärtbaren Kunststoff vorimprägnierten Fasermaterial für eine Leichtbau Verbundplatte, und besteht im Ablauf folgender Verfahrensschritte:

a. Abwechselndes Schichten einer Prepregschicht 6 und eines -Gitters 4, einer Prepregschicht 6, eines Gitters 4, einer Prepregschicht 6, eines Gitters 4 und so fort bis die vorbestimmte Dicke des Stapels erreicht ist, wobei die Gitter 4 durch parallele Stäbe 5 mit einem vorbestimmten Abstand gebildet sind und die Stäbe 5 eines Gitters 4 gegenüber den Stäben 5 eines benachbarten Gitters 4 auf Lücke versetzt -sind;

b. Pressen des Stapels senkrecht zu den Achsen der Stäbe 5;

c. Aushärten des Stapels unter Druck und Wärme sowie

d. Herausziehen der Stäbe 5 aus dem Stapel.

Das Verfahren kann sowohl mit horizontaler als auch mit vertikaler Schichtung durchgeführt werden. Insbesondere bei vertikaler Schichttung ist von Vorteil, daß alle hierbei ablaufenden Vorgänge mittels ansteuerbarer Einrichtungen weitgehend automatisch ausgeführt werden können.

FIG. 1

## Verfahren zur Herstellung eines wabenförmigen Kernes für eine Leichtbau-Verbundplatte

Die Erfindung bezieht sich auf ein Verfahren nach dem Oberbegriff des Anspruchs 1.

Waben zum Aufbau von Leichtbau-Verbundplatten (Sandwichplatten) werden dadurch hergestellt, daß ein Stapel vc· nicht imprägnierten Papierbogen, die an vorbestimmten Stellen in streifenförmigen Bereichen miteinander verklebt sind, zu einem Wabenblock auseinandergereckt und dann als Block mit einem aushärtbaren Kunstharz imprägniert werden. Nach dem Aushärten des Kunstharzes wird ein derartiger Block senkrecht zur Erstreckung der Waben in beliebig dicke Scheiben geschnitten, die dann als Kerne für Sandwichplatten verwendet werden. Bei einer derartigen Platte ist der Wabenkern zwischen zwei in der Regel planparallel verlaufenden Deckschichten von hoher Zugfestigkeit angeordnet, wobei die Längserstreckung der Waben senkrecht zu den Deckschichten orientiert ist. Dieser Aufbau einer Sandwichplatte ergibt optimale Leichtbau-Eigenschaften.

Bei der Herstellung der betreffenden Waben werden jedoch noch entscheidende Arbeitsgänge wie das Recken und Imprägnieren von Hand ausgeführt, was sich infolge des relativ hohen Lohnanteils ungünstig auf die Herstellkosten der Leichtbauplatten auswirkt. Als Imprägniermittel wird Phenolharz verwendet, das wegen seiner Toxizität bei der Verarbeitung sowie im Brandfalle problematisch ist. Die Freisetzung giftiger Rauchgase ist besonders bei der Verwendung der betreffenden Platten beim Bau von Passagierflugzeugen von Bedeutung.

Demgemäß leigt der Erfindung die Aufgabe zugrunde, ein gattungsgemäßes Verfahren derart anzugeben, daß dabei wesentliche Arbeitsgänge vollautomatisch ausgeführt werden können und das verwendete Material, insbesondere bei seiner Verarbeitung weniger giftige Gase entwickelt, wobei der vorbeschriebene Aufbau der Sandwichplatten im Prinzip unverändert bleibt.

Diese Aufgabe ist bei einem gattungsgemäßen Verfahren durch die kennzeichnenden Merkmale des Patentanspruchs 1 gelöst. Vorteilhafte Weiterbildungen der Erfindung sind in den Unteransprüchen angegeben.

Die Erfindung ist anhand der Zeichnung dargestellt und in der Beispielbeschreibung näher erläutert. Es zeigen

Fig. 1 im Prinzip eine Vorrichtung zur Herstellung eines Wabenkerns für eine Sandwichplatte und

Fig. 2 eine Vorrichtung mit vertikaler Schichtung.

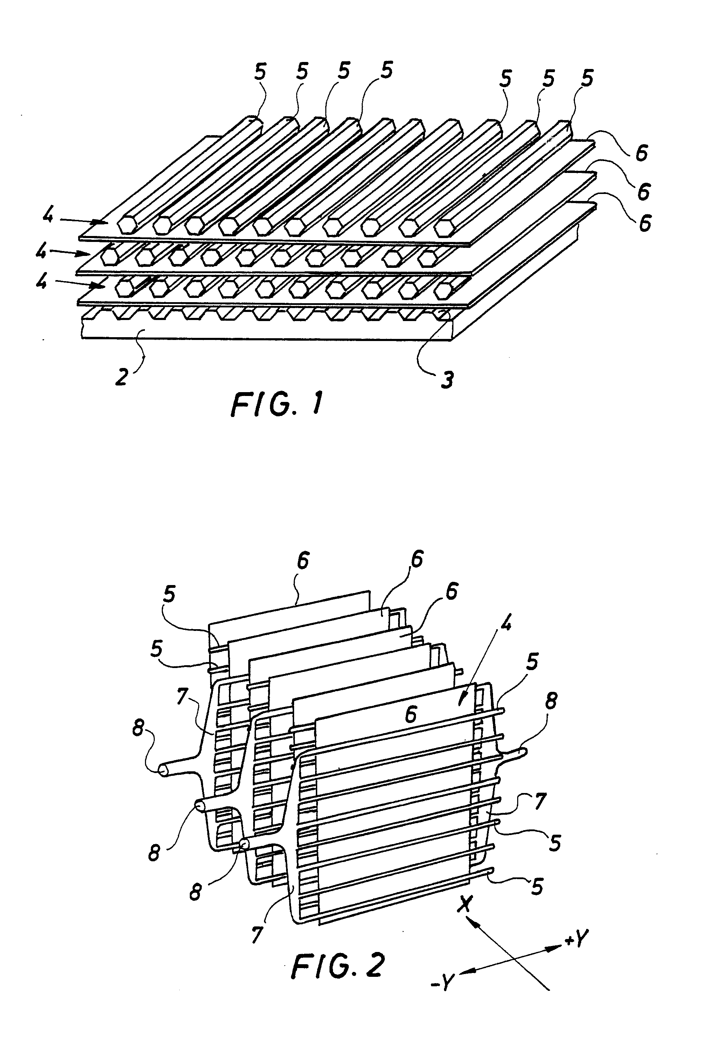

Figur 1 zeigt eine Vorrichtung 1 zur Herstellung eines Wabenkerns für eine Sandwichplatte, bestehend aus einer Grundplatte 2 mit einer profilierung 3 und einer Vielzahl von Preßgittern 4. Jedes Gitter 4 besteht aus einer Anzahl von aus einer Aluminiumlegierung hergestellter prismatischer Stäbe 5, die vorzugsweise einen sechseckigen Querschnitt aufweisen. Die Oberseite der Grundplatte 2 sowie die Stäbe 5 sind mit einem Trennmittel beschichtet. Die einzelnen Stäbe 5 eines Gitters 4 weisen einen vorbestimmten Abstand voneinander auf und sind innerhalb eines Gitters 4 derart angeordnet, daß jeweils die Stäbe 5 eines bestimmten Gitters gegenüber den Stäben 5 der nach unten und nach oben benachbarten Gitter 4 auf Lücke versetzt sind.

Zur Herstellung eines Wabenkerns wird zunächst eine Schicht aus mit einem aushärtbaren Kunststoff imprägniertem Fasermaterial (Prepreg), auf die Grundplatte 2 gelegt. Anschließend wird ein Preßgitter 4 derart auf die Prepregschicht gelegt, daß dessen Stäbe 5 parallel zu der Profilierung der Grundplatte verlaufen. Nun werden fortlaufend eine Prepregschicht 6, ein Gitter 4, eine Prepregschicht 6, ein Gitter 4 u.s.w. aufeinandergelegt, bis der Stapel die gewünschte Höhe erreicht hat. Der Stapel wird nun quer zu den Stäben 5 gepreßt. Nach dem Aushärten in einem geeigneten Ofen bilden die einzelnen Prepregschichten 6 eine zusammenhängende Wabenstruktur, wobei jede Prepregschicht 6 einen wellenförmigen Verlauf zeigt und jeweils im Stapel übereinander liegende Schichten in streifenförmigen Bereichen miteinander verklebt sind. Nach dem Abkühlen des Stapels werden die Stäbe 5 herausgezogen und der Wabenblock ist im Prinzip fertig. Als Trennmittel wird eine auf Polytetrafluoräthylen (PTFE) basierende Beschichtung verwendet. Insbesondere bei Verwendung von Prepregs, deren Fasern aus Graphit bestehen, hat sich überraschend gezeigt, daß das Herausziehen der Stäbe 5 keinerlei Schwierigkeiten bereitet.

Figur 2 zeigt schematisch eine Vorrichtung zur Herstellung eines Wabenkerns mit vertikaler Schichtung. Hier sind die Gitter 4 mit den Stäben 5 vertikal ausgerichtet, so daß die Prepregschichten 6 von oben zwischen die Gitter 4 eingeleitet werden können. Die Stäbe 5 eines Gitters 4 sind jeweils einseitig durch einen Träger 7 miteinander verbunden, der in ein Zugelement 8 aus läuft. Die einzelnen Zugelemente 8 sind abwechselnd nach + y und - y herausgeführt. Mit dieser Anordnung der Gitter 4, wie auch bei der horizontalen Schichtung nach Fig. 1, ist eine nahezu vollautomatische Herstellung von Wabenkernen durchführbar. Bei der Vorrichtung nach Fig. 2 ist beispielsweise folgendes Vorgehen denkbar. Innerhalb einer Aufrüststation befinden sich die Gitter 4 in den gezeigten Positionen. Hier werden die von einer Rolle kommenden Prepregschichten 6 von oben zwischen die Gitter 4 geführt, was möglicherweise durch von unten kommende Greifer unterstützt wird, die jedes Prepregende nach unten führen und hier festklemmen, wobei auch das obere Ende fixiert wird, nachdem es von der rolle abgetrennt ist. Sind alle Prepregschichten 6 eingebracht, werden die Gitter 4 in x-Richtung einander derart genähert, daß die Prepregschichten 6 eine Wellenform erhalten und sich gegenseitig in streifenförmigen Bereichen berühren. Dann wird der so gebildete Stapel von einer Preßvorrichtung aufgenommen, die gleichzeitig als Transportpalette dient. Hiermit wird der Stapel wie vorbeschrieben gepreßt und dann mit dieser in einen geeigne-ten Ofen zum Aushärten gebracht. Während des Aushärtens kann in der Aufrüststation ein neuer Stapel zusammengestellt werden. Ist der Stapel ausgehärtet, gelangt er in eine Entformstation. Hier werden die Gitter 4 mittels der Zugelemente 8 aus dem Stapel herausgezogen. Hierzu sind Ausziehvorrichtungen vorgesehen, die mit den Zugelementen 8 in Eingriff gebracht werden. Anstelle des sechseckigen Querschnittes können die Stäbe 5 auch jede andere geeignete Querschnittsform aufweisen. Alle bei den vorbeschriebenen Vorrichtungen ablaufenden Vorgänge können aufgrund fachüblicher Maßnahmen der Automation mittels ansteuerbarer Einrichtungen ausgeführt werden. Dabei sind sowohl elektrische, hydraulische oder pneumatische Betätigungen möglich.

Auch hinsichtlich der Steuerung der Vorgänge sind alle geeigneten Prinzipien anwendbar, wobei insbesondere bei Verwendung di gitaler Steuersignale die Möglichkeit eröffnet wird, den Ablauf des aufgezeigten Verfahrens durch abgespeicherte Programme zu steuern.

Die Auswahl der verwendeten Werkstoffe erfolgt aufgrund fachüblicher Überlegungen und betrifft sowohl die Wabenkerne als auch die Vorrichtungen zu deren Herstellung.

## Ansprüche

1. Verfahren zur Herstellung eines wabenförmigen Kernes aus einem mit einem aushärtbaren Kunststoff vorimprägnierten Fasermaterial für eine Leichtbau-Verbundplatte, **gekennzeichnet**, durch folgende Verfahrensschritte:

a. Abwechselndes Schichten einer Prepregschicht (6) und eines Gitters (4), einer Prepregschicht (6), eines Gitters (4), einer Prepregschicht (6), eines Gitters (4) und so fort bis die vorbestimmte Dicke des Stapels erreicht ist, wobei die Gitter (4) durch parallele Stäbe (5) mit einem Vorbestimmten Abstand gebildet sind und die Stäbe (5) eines Gitters (4) gegenüber den Stäben (5) eines benachbarten Gitters (4) auf Lücke versetzt sind;

b. Pressen des Stapels senkrecht zu den Achsen der Stäbe (5);

c. Aushärten des Stapels unter Druck und Wärme sowie

d. Herausziehen der Stäbe (5) aus dem Stapel.

2. Verfahren nach Anspruch 1, **gekennzeichnet** durch eine horizontale Schichtung.

3. Verfahren nach Anspruch 1, **gekennzeichnet** durch eine vertikale Schichtung.

4. Verfahren nach einem der Ansprüche 1 bis 3, dadurch **gekennzeichnet**, daß die Stäbe 5 einen sechseckigen Querschnitt aufweisen.

5. Verfahren nach einem der Ansprüche 1 bis 4, dadurch **gekennzeichnet**, daß Stäbe 5 einen beliebigen Querschnitt aufweisen.

FIG. 1

FIG. 2